# EUROPEAN PATENT SPECIFICATION

(11) **EP 1 108 399 B1**
(45) Date of publication and mention of the grant of the patent: **16.05.2007**
(21) Application number: 00125005.9
(22) Date of filing: 16.11.2000
(51) Int. Cl.: A61C 13/20, B29C 33/38, B29C 33/30

(54) **Universal mould in transparent material for realizing dental prostesis, particularly suitable for light-sensitive materials**
Aus transparentem Material hergestellte Universalgiessform zur Herstellung von Zahnprothesen, insbesondere geeignet für lichtempfindliche Materialien
Moule universel en matériau transparent destiné à la fabrication de prothèses dentaires, en particulier utile pour des matériaux photosensibles

(30) Priority: 16.12.1999 IT MI990755 U
(43) Date of publication of application: 20.06.2001
(73) Proprietor: Scalavino Giuseppe Davide, 20141 Milano (IT)
(72) Inventor: Scalavino Giuseppe Davide, 20141 Milano (IT)
(74) Representative: La Ciura, Salvatore

(56) References cited:
- EP-A- 0 687 451
- WO-A-98/53756
- FR-A- 1 032 507
- FR-A- 1 358 043

## Description

This invention refers to a muffle or mould for bridges, crowns, dental arches and prosthesis consisting of two parts which may be coupled or disjointed, these parts being made of transparent material.

A housing is provided suitable to contain a certain quantity of material utilized for obtaining the imprint, particularly silicone, said muffle has a series of ports for discharging the silicone in excess when closing the mould as well as positioning means for the correct positioning of the silicone imprint when removing or replacing the same in the mould.

The muffle according to this invention which consists of two parts only, reduces labour times, has no metal support or basis, is light, completely made of transparent material and it results to be more practical to be used in comparison to the ones well know in the art.

Easy positioning and smaller sizes make the same suitable to be used with any kind of oven for photo polimerization commercially available for this kind of work.

The field of this invention is the one of dental technicians equipments, utilized for manufacturing bridges, crowns, dental arches, dental prosthesis.

The muffle according to the invention refers to the final part of the manufacturing process of a prosthesis. Starting from a model consisting of a holding framework generally in golden alloy or non precious alloys , with a wax coating, already shaped, it is necessary to make an imprint, placing inside it the golden support and to apply, the final coating to this support, instead of the wax.

These prosthesis manufacturing phases according to the well known technique provide for the following steps:
■ pressure insertion of the metal framework with its wax shaped coating on a layer of material, particularly silicone, acting as a support;
■ finishing of the first layer of white or opaque silicone material, isolating the same by detaching the material in excess and making it perfectly follow the shape countour;
■ the application of transparent silicone material, contained in the other separate part of mould, so that in this second layer of silicone material remains the shape of the prosthesis to be formed;
■ letting the silicone polymerize;
■ separating the parts of the mould, removing the wax, closing the mould, filling the cavity free from the wax with a composite material of prostesis finishing off.

The general phases of the above procedure are already known, even if the procedure has been carried out with means different from the ones of the present invention.

Particularly it's known from the Italian patent application n° M197A 001267 a container for the reticulation of composite materials on bridges and dental prostehesis, consisting of a series of plate shaped elements superimposable and closing among them.

At least one of these superimposable elements includes a series of independently removable plugs for creating an area suitable for placing the metal prostehesis framework, at least one of said plate shaped elements and at least one plate shaped element adjacent to it being made of transparent material, allowing to utilize for making the imprint , a silicone photo-polymerizable material.

This well known mould presents some limitations and inconveniences.

In details the fact of providing the mould comprising three or more separable parts each of them having a certain number of removable plugs, makes the structure more complicate, difficult to be assembled with the necessary precision and very often this envolves the need of making moulds too big which cannot be contained in the usual ovens utilized for this kind of work, so that it becomes necessary to buy a special oven.

EP0.687.451 A2 shows a muffle made of two parts having facing cavities suitable to be fitted with material destined to realize an imprint.

The two parts are made of a material transparent to microwaves.

In this field there is a request of simpler methods for making prosthesis, using more economical moulds of simple and quick assembly, having adequate characteristics of precision and preferably completely made of transparent material that allows the light to reach the material from everywhere so granting a more complete and quick polymerization.

This and other aims are reached by a muffle consisting of two separate parts matching each other, and shaped so as to form a cavity containing the prosthesis support material, particularly silicone, provided on its facing walls with a series of clearances allowing the material in excess to go out when closing the mould.

Some positioning means will be provided for a correct positioning of the silicone material support, should the same be removed or replaced again in the mould.

The object of the present invention is disclosed in claim 1.

The present invention will be now described in detail as a non limitative example with reference to the enclosed photos where:

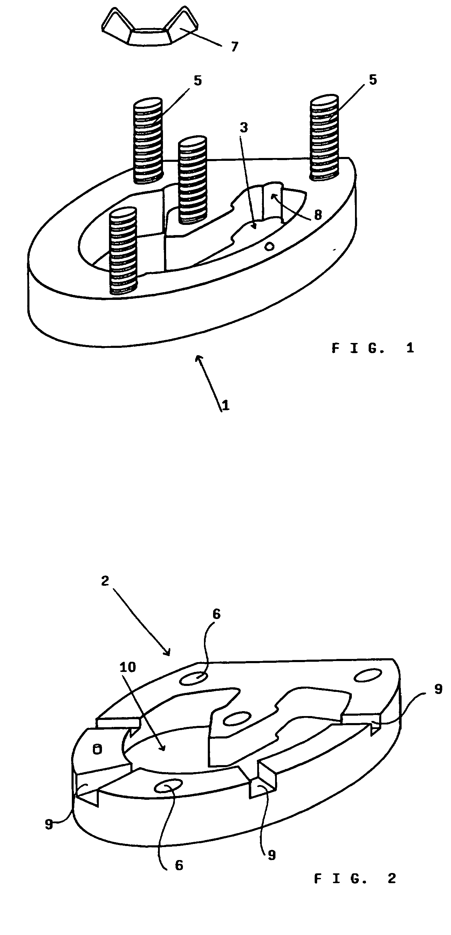

- Fig. 1 shows a perspective view, of one of the two parts constituting the muffle suitable as a basis;
- Fig. 2 shows a perspective view of the second part of the muffle in overturned position;

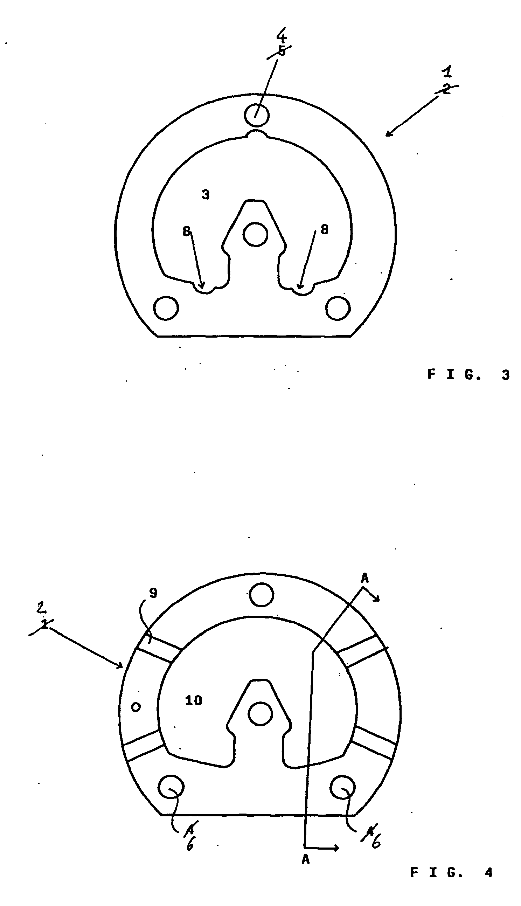

- Fig. 3 and 4 are the views of the two parts of the muffle;

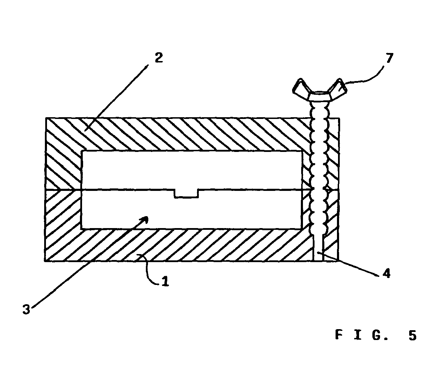

- Fig. 5 is a section of the mould, closed taken along the line A-A of
- drawing 4.

With reference to the attached drawings, the muffle according to the invention consists of two parts, respectively marked 1 and 2, matchable and separable one another which combined together realize a mould inside of which the material for realizing the imprint and the manufacture of dental prosthesis is put.

In detail the part 1, acting as a basis comprises a body in transparent material plexiglass, where a lodgement is obtained for example by milling or other known systems destined to be filled with silicone on which the metal support of the prosthesis is then fixed.

The semi-mould 1 has a series of holes shown with number 4 in drawing 3, threaded until a certain deep, to allow the insertion and the tightening of screw elements.

In the part 2 of mould some through holes 6 are obtained , in positions corresponding to the ones of screws 5 in the lower mould, in order to link the two semi-moulds by superimposition, with the screws inserted in the holes 6, allowing the subsequent tightening of the two semi moulds by means of nuts, wing nuts or similar ones, shown at n. 7.

On the inner surface of the semi mould 1 some nicks or protrusions shown with n. 8 are provided, acting as positioning means for a correct rearrangement of the silicone support in case this should be removed by the mould for example for washing, for finishing operations and the like.

The second part of muffle shown with 2, is the cover which closes the mould and has, on the surface which fits with the corresponding surface of the basis, a series of splines (9) for discharging the material in excess when closing the mould.

Also in the part 2 there is a housing (10) obtained by milling, printing or other system known in the art, which has to be filled with the material realizing the imprint, in this case silicone.

The two parts of muffle 1 and 2 are made of a material transparent to ultra-violets rays, in order to proceed without difficulty to the polymerization of the silicone contained in the mould.

The utilization is as follows:
once the metal support is ready, shaped, coated with a wax shaped layer outlining the final shape of teeth, we fill the housing 3 of the base 1 and we insert by pressure the metal prostesis structure in the silicone still soft.

This must be sufficiently sunk in the silicone for granting a good anchorage but leaving out the part of the tooth.

We smooth the silicone surface aligned with the upper edge of the base, refining with accuracy the layer of silicone around the prosthesis.

Then we spray a layer of anti adherent material, we fill with silicone the housing 10 of the cover 2 and we superimpose the cover on the base, inserting the holes 6 on the screws 5.

We make pressure until the two parts of the mould are perfectly linked together with the part of prosthesis projecting from the base sinking in the silicone contained in the cover 2.

During the clamping of the mould the silicone in excess comes out through the ports 9.

We climp the two parts of muffle which may be put in an oven for the polymerization of the composite light-sensitive material.

At the end of this phase the mould can be opened. The wing nuts may be unscrewed, and separating the cover from the base we obtain, in the upper part, a mould exactly reproducing the final shape of the teeth, while the lower part is shaped in order to realize a base or support for the metal structure of the prosthesis.

Now we remove the wax by the heat and we replace the metal structure in the mould which is in the base 1.

We close again the muffle with the upper side of the mould which we insert around the metal support of the prosthesis.

Between this support and the upper part of the mould there is now the space previously taken by the wax, space which may be filled with composite or photosensitive resins utilized for covering the metal support and the tooth finishing off.

It's simple to make the described muffle even if it grants a remarkable precision of employ.

The two parts are guided by the screws 5 which ensure the precise positioning of the base on the cover.

Anyway, if necessary, it's possible to provide for other positioning points for example two notches or other projecting elements , a semi mould
which gets into some corresponding housing provided in the other part.

If it should be necessary to remove the silicone imprint, for washing it or for a later utilization for example for an intervention on a prosthesis already made, the notches 8 will properly allow the silicone to get into its housing.

The manufacture of this muffle in such a way results to be very cheap, being possible to produce the same simply starting from a sheet of plexiglass or other similar material, making the two housings 2 and 10 by milling and edging until a certain deep the holes 4 in the base 2.

Of course in case a large quantity of pieces should be produced, it will be possible to carry out different production systems , for example by printing or other well known systems.

In the extent of the same solution idea other type of esecutions may be carried out with a a particular reference to the material which may change according to the required utilizations.

## Claims

1. Muffle or mould for prosthesis and dental bridges consisting of two separable parts (12) which may be matched, said parts having facing cavities corresponding each other, suitable to be fitted with material destined to realize the imprint, and also having suitable means to guide said parts when the same are joined and pressed together, as well as positioning means suitable to ensure the correct location of the imprint charactherized by the fact that said two separable parts (1, 2) are made of plexiglass transparent to ultraviolet rays.

2. Muffle according to the claim n. 1 where said positioning means consist of cavities or notches suitable to engage the imprint for granting a correct location of the same.

3. Muffle according to claim 1, **characterized by** the fact of having at least in one of said parts, one or more ports suitable to allow the discharge of the material in excess when the parts are pressed together, on the prosthesis model.

4. Muffle according to the previous claims **characterized by** the fact of being provided in one part with projecting screw elements acting both for mould clamping and guiding for the correct location of the two parts.

## Patentansprüche

1. Muffel oder Form für Prothesen- und Zahnbrücken, bestehend aus zwei trennbaren Teilen (12), die in Übereinstimmung gebracht werden können, wobei die Teile zueinander weisende, einander entsprechende Hohlräume aufweisen, geeignet, um mit dem zum Durchführen des Abdrucks vorgesehenen Material versehen zu werden, und auch mit geeigneten Mitteln zum Führen der Teile, wenn dieselben zusammengefügt und zusammengepresst werden, sowie Positionierungsmittel, die zum Sichern des korrekten Sitzes des Abdrucks geeignet sind, **dadurch gekennzeichnet, dass** die zwei trennbaren Teile (1,2) aus für Ultraviolettstrahlen durchlässigem Plexiglas hergestellt sind.

2. Muffel nach Anspruch 1, wobei die Positionierungsmittel aus Hohlräumen oder Einkerbungen bestehen, die geeignet sind, um den Abdruck zum Gestatten eines korrekten Sitzes desselben in Eingriff zu bringen.

3. Muffel nach Anspruch 1, **dadurch gekennzeichnet, dass** sie in mindestens einem der Teile eine oder mehrere Öffnungen aufweist, die geeignet sind, um das Ablassen von dem überschüssigen Material zu erlauben, wenn die Teile auf dem Prothesemodell zusammengepresst werden.

4. Muffel nach den vorangehenden Ansprüchen, **dadurch gekennzeichnet, dass** in einem Teil hervorstehende Schraubelemente, die sowohl zum Festklammern der Form als auch zum Führen zu dem korrekten Sitz der zwei Teile wirken, bereitgestellt sind.

## Revendications

1. Coupelle ou moule pour des prothèses et des bridges dentaires, consistant en deux parties (12) séparables qui peuvent être appariées, les parties ayant des cavités se faisant face qui se correspondent l'une à l'autre, propres à être garnies de matière destinée à réaliser l'empreinte, et ayant aussi des moyens appropriés pour guider ces parties lorsqu'elles sont réunies et pressées ensemble, ainsi que des moyens de mise en position propres à assurer l'emplacement correct de l'empreinte, **caractérisée par le fait que** les deux parties (1, 2) séparables sont en plexiglas transparent aux rayonnements ultraviolets.

2. Coupelle suivant la revendication 1, dans laquelle les moyens de mise en position consistent en des cavités ou en de encoches propres à coopérer avec l'empreinte pour assurer un emplacement correct de celle-ci.

3. Coupelle suivant la revendication 1, **caractérisée par** le fait d'avoir au moins dans l'une des parties un ou plusieurs orifices propres à permettre l'évacuation de la matière en excès lorsque les parties sont pressées ensemble sur le modèle de prothèse.

4. Coupelle suivant les revendications précédentes, **caractérisée par** le fait d'être munie dans une partie d'éléments de vissage en saillie agissant à la fois pour serrer le moule et pour guider en vue de la mise en position correcte des deux parties.
